# EUROPÄISCHE PATENTSCHRIFT

(11) **EP 3 078 952 B1**
(45) Veröffentlichungstag und Bekanntmachung des Hinweises auf die Patenterteilung: **17.06.2020**
(21) Anmeldenummer: 16000603.7
(22) Anmeldetag: 14.03.2016
(51) Int. Cl.: G01J 5/04, G01J 5/02, G01J 5/08

(54) **PIR-BEWEGUNGSMELDER**
PIR MOVEMENT ANNUNCIATOR
DETECTEUR DE MOUVEMENT PIR

(30) Priorität: 10.04.2015 EP 15001020
(43) Veröffentlichungstag der Anmeldung: 12.10.2016
(73) Patentinhaber: Silverlight AG, 8404 Winterthur (CH)
(72) Erfinder: Keller, Hans Jürg, 8712 Stäfa (CH); Keller, Valentin Christoph, 8404 Winterthur (CH)
(74) Vertreter: Gernet Althaus IP AG

(56) Entgegenhaltungen:
- WO-A1-2009/011860
- GB-A- 2 205 642
- US-A- 5 424 718
- US-A- 5 942 976

## Beschreibung

Die Erfindung betrifft einen PIR-Bewegungsmelder zur Erfassung eines bewegten Körpers durch Detektion seiner Eigenstrahlung im infraroten Bereich gemäss dem Oberbegriff von Anspruch 1. Solche Bewegungsmelder werden zusammen mit entsprechenden Auswertevorrichtungen insbesondere zur Erfassung von Objekt-Bewegungen verwendet, welche auch als passiv-infrarot Bewegungsmelder bezeichnet werden.

Einrichtungen zur Erfassung der infraroten Eigenstrahlung von Körpern mit einer Temperatur nahe der Umgebungstemperatur und deren Auswertung zur Erfassung von Bewegungen sind seit längerer Zeit bekannt zur Erkennung von beispielsweise Menschen oder auch Fahrzeugen.

In diesen sogenannten passiv-infrarot Bewegungsmeldern, abgekürzt PIR Bewegungsmelder, ist ein Sensor vorgesehen und eine Optik, die mittels segmentierten Spiegeln, Linsen oder ähnlichen optischen Elementen das Sichtfeld auf eine Anzahl begrenzter Zonen konzentriert, und damit strahlende Körper, die sich in solche Zonen hinein und hinaus bewegen, am Sensor eine wechselnde Bestrahlung erzeugen und somit durch Auswertung der wechselnden Signale des Sensors die Detektion einer Bewegung ermöglichen.

Solche Einrichtungen sind beispielsweise in US 4,321,594 beschrieben und in vielfältigen Bauformen allgemein bekannt. Entsprechende Einrichtungen dienen zur Erkennung von sich bewegenden Menschen, Fahrzeugen oder anderen Objekten, um damit beispielsweise die Schaltung von Licht, Energie, Alarmen oder andern Funktionen auszulösen, und dienen insbesondere als Bewegungsmelder, um eine Beleuchtung einzuschalten, wenn sich ein Mensch im Sichtbereich einer solchen Einrichtung bewegt.

. Bekanntermassen findet die Erkennung der Infrarotstrahlung eines an seiner Oberfläche etwa 25 bis 30°C oder etwa 300° Kelvin warmen Körpers eines Menschen vor einem etwa 20°C warmen Hintergrund im Spektralbereich der Planck'schen Strahlung mit einem Maximum in der Nähe von 10 µm Wellenlänge statt, im Hauptbereich der Strahlung von etwa 8 bis 14 µm.

Solche Bewegungsmelder benötigen ein oder mehrere strahlungsdurchlässige Gehäuseabdeckungen, um den oder die Sensoren vor Umwelteinflüssen zu schützen oder um Fenster herzustellen, die Linsen oder Fresnel-Linsen enthalten. Für den genannten Wellenlängenbereich bieten sich einerseits kristalline Materialien an wie Diamant, NaCl, CaF sowie auch Halbleiterkristalle oder amorphe Halbleitergläser, sowie der Kunststoff Polyethylen, der aufgrund seiner einfachen Molekularstruktur im Hauptbereich des Strahlungsspektrums von 8 bis 14 µm eine gewisse Durchlässigkeit besitzt.

Die PIR-Sensoren sind üblicherweise in einem Sensorgehäuse untergebracht, welches ein strahlendurchlässiges Fenster aufweist. Um die Sensoren vor Feuchtigkeit und Verunreinigungen zu schützen, ist die Verbindung zwischen Sensorgehäuse und Fenster bevorzugt luft- und feuchtigkeitsdicht ausgeführt. Aus wirtschaftlichen und technischen Gründen werden die kleinen Fenster der Sensoren in der Regel aus Germanium oder Silicium hergestellt, wobei gleichzeitig auch Interferenzschichten auf dieses Fenster aufgebracht werden, die eine optische Filterwirkung in Bezug auf die Wellenlänge hervorrufen, die auf den zentralen Teil des zu detektierenden Spektrums ausgerichtet ist.

Die Gehäuseabdeckung der Bewegungsmelder, die zweckmässigerweise wesentlich grösser ist als das Fenster des Sensorgehäuses, wird nur selten als Germaniumlinse oder Siliziumwafer oder dergleichen aus kristallinem Material ausgebildet, sondern üblicherweise aus Polyethylen, wobei es sich um Folien, Platten oder Formteile handeln kann, die in vielen Fällen die Struktur von Fresnel-Linsen beinhalten, womit gegebenenfalls eine zusätzliche Optik entfallen kann.

Die Dicke dieser Gehäuseabdeckungen in der Form eines Fensters oder einer Linse aus Polyethylen beträgt in der Regel zwischen 0.1 mm und 1.0 mm, da bei grösseren Dicken die Transmission im Bereich 8 bis 14 µm sehr stark abnimmt und auch eine hohe Streuung durch die Opazität auftritt. Dementsprechend können dickere Gehäuseabdeckungen aus Polyethylen nur in Ausnahmefällen für Bewegungsmelder sehr geringer Reichweite und Empfindlichkeit eingesetzt werden.

Die typischen Gehäuseabdeckungen, die als Fresnel Linse oder segmentierte Fresnel-Linse ausgebildet sind, haben eine Dicke um 0.4 bis 0.5 mm und sind aus Polyethylen gefertigt. Diese Dicke ergibt sich einerseits aus einer minimalen mechanischen Stabilität sowie der Möglichkeit, die Rillen oder Rillenprofile der Fresnel-Linsen durch Spritzguss oder Pressverfahren realisieren zu können. Andererseits versucht man durch eine Begrenzung der Dicke noch eine genügende Infrarotdurchlässigkeit zu erhalten, die im zentralen Wellenlängenbereich von 8 bis 10 µm bei einer Dicke von 0.5 mm bereits unter 30% sinkt.

Andere vorbekannte Ausführungen verwenden halbkugelige oder gewölbte Linsenanordnungen, wie dies beispielsweise in US 4,930,864 dargestellt ist. Solche Linsenanordnungen können mehrere Linsen auf einer gewölbten Oberfläche enthalten, wobei die Linsen als gewöhnliche bikonvexe Linsen oder als Fresnellinsen oder Teile davon ausgeführt sein können.

Die Verwendung von infrarotdurchlässigen Gehäuseabdeckungen in Form von Fenstern aus Polyethylen ist beispielsweise in US 4'795'908 oder EP-A-0440112 beschrieben.

Da Polyethylen ein sehr weicher Kunststoff ist, führt dies dazu, dass so dünne Gehäuseabdeckungen in Form von Fenstern oder - Linsen eine sehr geringe mechanische Festigkeit aufweisen, was sich insbesondere bei Bewegungsmeldern, die als Lichtschalter oder Komfortsteuerungen eingesetzt werden und sich daher oft im Handbereich von Menschen befinden, als sehr, nachteilig erweist, da sie oft mutwillig oder unabsichtlich zerstört werden. Zudem neigt eine solche dünne Platte oder Linse als Gehäuseabdeckung bei grösseren Flächen von 10 oder mehr cm², wie dies zur Erreichung grösserer Reichweiten der Bewegungserkennung notwendig ist, zu wellen- oder beulenartigen Verformungen, was ästhetisch unbefriedigend ist. PIR Bewegungsmelder lassen sich daher fast immer aufgrund der Polyethylen-Fenster oder -Linsen als solche erkennen und es gelingt nur in Ausnahmefällen mit grossem Aufwand, ästhetisch befriedigende und unscheinbare Abdeckungen herzustellen.

WO-A1-2009/011860 beschreibt ein optisches Filter für beispielsweise Infrarot-Bewegungsmelder. Um eine Überhitzung eines Sensors, insbesondere eines pyroelektrischen Sensors, zu verhindern, wird die einfallende Strahlung in einem für den Sensor nicht benötigten Bereich durch das optische Filter ausgefiltert, wobei das optische Filter aus einer Vielzahl von Schichten besteht, welche ein Eindringen der nicht benötigten Wellenlängenbereiche zum Sensor durch destruktive Intereferenz und/oder Reflexion verhindern.

US-A-5,942,976 beschreibt einen Passiv-Infrarot-Einbruchdetektor enthaltend einen Sabotagedetektor. Der Einbruchdetektor enthält ein Gehäuse und ein gegen einen zu überwachenden Raum gerichtetes Eintrittsfenster für Infrarotstrahlung. Der Sabotagedetektor enthält eine Lichtquelle, einen entsprechenden Lichtsensor und ein optisches Beugungsgitter auf der Außenseite des Eintrittsfensters. Die Lichtquelle und der Lichtsensor können auf derselben oder auf der gegenüberliegenden Seiten des Eintrittsfensters angebracht sein. Durch Beugung wird Licht der Lichtquelle auf den Sensor fokussiert, und ein sich ergebendes elektrisches Signal von dem Sensor wird von einer Auswerteschaltung ausgewertet. Im Falle einer Sabotage, verschwindet die Fokussierungswirkung der optischen Beugungsgitterstruktur, so daß die Lichtintensität am Detektor verringert wird. Der Rückgang der Lichtintensität löst dann einen Sabotagealarm aus.

EP-A-0440112 beschreibt aus Polyethylen bestehende infrarotfilterscheiben als Abdeckfenster für passive Infrarot-Eindring-Detektoren und erwähnt auch Infrarotfilterscheiben für Flammenmelder aus PTFE.

GB-A-2205642 beschreibt eine Infrarotstrahlung aktivierte Steuerschaltanordnung mit einer schalenförmigen dünnen Linse aus Infrarotstrahlung durchlässigem Polymehylpenten.

DE-A1-19535408 beschreibt ein Infrarot-Strahlungsthermometer enthaltend eine Schutzkappe aus einer dünnen Folie aus Polyethylen, Polypropylen oder einem Copolymer aus diesen beiden Stoffen. Das Infrarot-Strahlungsthermometer weist zudem ein dem Infrarot-Sensor zugeordnetes Filter mit einer dielektrischen Beschichtung aus einem infrarote Strahlung transmittierendem Material auf, welches den Wellenlängenbereich zwischen 5 und 14 µm, der üblicherweise für die Temperaturmessung herangezogen wird, durchlässt.

DE-A1-102011103818 beschreibt eine Infrarot-Sensoranordnung für ein Temperaturmessgerät enthaltend in Einstrahlrichtung vor dem Sensor einen Spiegel, eine Blende oder einen wellenlängenabhängigen Filter und weist gegebenfalls eine schmutzabweisende Abdeckung aus Polyethylen, Polypropylen, Polytetrafluorethylen oder Poly-Para-Xylene auf.

EP-A1-2060889 beschreibt eine abnehmbare Sondenabdeckung aus Polyethylen, Polypropylen, Polycarbonat, Polystyrol, Polyethylen-Terephthalat oder Polyvinylchlorid für ein Ohrthermometer.

WO 2006/100672 A2 beschreibt einen PIR-Sensor mit mindestens drei Teildetektoren zur Erfassung der Infrarotstrahlung in verschiedenen Sichtzonen, wobei der Sensor bevorzugt auch ein Infrarot-durchsichtiges Fenster aus HDPE, Silizium oder Germanium aufweist.

Während für verschiedene Anwendungen wie beispielsweise Thermometer die zu detektierende Intensität der Infrarotstrahlung eine untergeordnete Rolle spielt, da die Reaktionszeit der Messvorrichtung nicht kritisch ist, spielt die auf den Sensor gelangende Strahlungsintensität für PIR-Bewegungsmelder eine wichtige Rolle, da dadurch eine kurze Reaktionszeit und ein grossräumiger Erfassungsbereich des Bewegungsmelders ermöglicht wird. Deshalb ist eine hohe Transmissionsrate der Infrarotstrahlung im zu detektierenden Wellenlängenbereich durch eine Sensorabdeckung von entscheidender Bedeutung.

Trotz intensiver Suche nach geeigneten Materialien hat man keinen Kunststoff oder ein anderes leicht zu verarbeitendes und kostengünstiges Material gefunden, dass im Bereich 8 bis 14 µm eine brauchbare Transmission aufweist. Dies aus dem bekannten Grund, dass sehr viele Molekularabsorptionsfrequenzen insbesondere von organischen Verbindungen in diesem Bereich liegen, und jeder Kunststoff, der eine komplexere Struktur als Polyethylen aufweist, zwangsläufig mehr solche Absorptionsfrequenzen und damit eine geringere Transmission in diesem Bereich aufweist.

Einzig mit ganz dünnen Folien, deren Dicke in der Grössenordnung der Wellenlänge oder darunter liegt, lässt sich die Transmission im Bereich 8 bis 14 µm auch mit anderen Kunststoffen erreichen. So können beispielsweise Polyesterfolien einer Dicke von 4 µm hergestellt werden, die, wenn sie mechanisch eingespannt werden, eine gewisse Festigkeit erreichen. Aber auch diese Lösung befriedigt nicht da die Folien gegenüber äusseren Kräften und spitzen Objekten sehr verletzlich sind.

Deshalb sind nach 40 Jahren weltweiter Verbreitung der PIR Bewegungsmelder die Fenster und Linsen mit ganz wenigen Ausnahmen, die teure und aufwendige kristalline oder amorphe Kristalle oder Halbleiter verwenden, immer noch ausschliesslich aus Polyethylen gefertigt.

Aufgabe vorliegenden Erfindung ist es, einen PIR-Bewegungsmelder zur Erfassung eines bewegten Körpers durch Detektion seiner Eigenstrahlung im infraroten Bereich bereit zu stellen, welcher vorbeschriebene Nachteile hinsichtlich der Gehäuseabdeckung behebt. Insbesondere soll die Gehäuseabdeckung eine hohe mechanische Festigkeit aufweisen und kostengünstig in Form eines Fensters oder einer Linse herstellbar sein. Aufgabe vorliegender Erfindung ist insbesondere, einen PIR-Bewegungsmelder zur Erfassung eines bewegten Körpers durch Detektion seiner Eigenstrahlung im infraroten Bereich mit einem Maximum der Eigenstrahlung des bewegten Körpers im Wellenlängenbereich zwischen 7 und 10 µm bereit zu stellen, welcher eine Gehäuseabdeckung in Form eines Fensters oder einer Linse aufweist, die aus einem ausreichend stabilen und dicken Kunststoff gefertigt ist, und dessen Empfindlichkeit den bisherigen Bewegungsmeldern mit einer Gehäuseabdeckung aus dünnem Polyethylen nicht nachsteht.

Erfindungsgemäss wird die Aufgabe mit einem PIR-Bewegungsmelder gemäss Anspruch 1 gelöst. Bevorzugte Ausführungsformen werden in den abhängigen Ansprüchen beschrieben.

Der passiv-infrarot (PIR) Bewegungsmelder zur Erfassung eines bewegten Körpers durch Detektion seiner Eigenstrahlung im infraroten Bereich enthält ein schalenförmiges Schutzgehäuse mit einer Schutzgehäuseöffnung und einem innerhalb des Schutzgehäuses angeordneten infrarot-empfindlichen Sensor in einem Sensorgehäuse, welches mit einem strahlungsdurchlässigen Fenster als optisches Filter versehen und dicht verschlossen ist. Die Schutzgehäuseöffnung ist von einer Gehäuseabdeckung in Form eines Fensters oder einer Linse überdeckt, wobei die vom Sensor zu detektierende Infrarotstrahlung einerseits die Gehäuseabdeckung und andererseits das optische Filter passieren muss. Das Schutzgehäuse wie auch das Sensorgehäuse ausserhalb des Sensorfensters sind üblicherweise für Infrarotstrahlung nicht durchlässig. Die Gehäuseabdeckung enthält eine Folie, Platte oder einen Formkörper aus Polymethylpenten (PMP), Polytetrafluorethylen (PTFE), Polypropylen (PP) oder Polyester, welche eine Dicke zwischen 0,8 mm und 3 mm aufweist. Gehäuseabdeckungen aus derartigen Kunststoffen sind für Infrarotstrahlung im mittleren Wellenlängenbereich von 8 µm bis 14 µm des Planck'schen Strahlungsspektrums einer infraroten Eigenstrahlung von Körpern bei Raumtemperatur weitgehend undurchlässig, weisen aber Bereiche, sogenannte Transmissionsbanden, im Wellenlängenbereich von 3.5 bis 6 µm und für Wellenlängen zwischen 12.5 und 50 µm auf, welche eine mehr oder weniger hohe Strahlungsdurchlässigkeit aufweisen.

Die Lösung der erfindungsgemässen Aufgabe führt zu einer Gehäuseabdeckung in Form eines Fensters oder einer Linse aus einem Kunststoff, der überwiegend oder ausschliesslich ausserhalb des zentralen Spektrums einer infraroten Eigenstrahlung von Körpern bei Raumtemperatur mit einer Wellenlänge von 8 bis 14 µm strahlungsdurchlässig ist. Deshalb werden Sensoren in einem mit einem strahlungsdurchlässigen Fenster als optisches Filter versehenen Sensorgehäuse verwendet, die von den marktüblichen Ausführungen abweichen und nicht das übliche, auf das zentrale Spektrum abgestimmte optische Filter von beispielsweise 8 bis 14 µm verwenden, sondern in einem wesentlich weiteren Wellenlängenbereich durchlässig sind, insbesondere bei Wellenlängen von 3.5 bis 6 µm und oberhalb von 12.5 µm, wobei die Durchlässigkeit im zentralen Bereich von 8 bis 12 µm nicht relevant ist und auch Null oder geringfügig sein darf, da in diesem Wellenlängenbereich sowieso keine Strahlung empfangen werden kann.

Polymethylpenten weist beispielsweise bei Wellenlängen von 5 µm, bei 15 µm und über 25 µm Transmissionsbanden auf, die auch bei grösseren Dicken der Gehäuseabdeckung von 1 oder 2 Millimetern, wie sie für stabile Kunststoffteile zweckmässig sind, noch zu einer hohen Transmission bei diesen Wellenlängen führt.

Dabei wird in Kauf genommen, dass diese Kunststoffe im zentralen Bereich des Spektrums einer infraroten Eigenstrahlung von Körpern bei Raumtemperatur von 8 µm bis 14 µm praktisch keine Transmission besitzen und damit dieser zentrale Teil der Strahlungsenergie nicht ausgenützt werden kann. Andererseits besitzt die Planck'sche Strahlung auch geringe Anteile weit ausserhalb des Maximums oder zentralen Bereiches, bei wesentlich kürzeren und wesentlich längeren Wellenlängen.

Zudem besitzt insbesondere Polymethylpenten in den durchlässigen Spektralbereichen eine hohe Transparenz ohne die Opazität (Trübung der Strahlung) von Polyethylen, was dazu führt, dass die Dicke einen wesentlich geringeren Einfluss auf die Transmission hat als bei Polyethylen.

Wird die erfassbare Energie des zu detektierenden Signals aufsummiert, so kommt die Lösung gemäss der Erfindung trotz Vernachlässigung des zentralen Spektralanteiles aufgrund der vorteilhaften Transmissionseigenschaften verschiedener Kunststoffe für die weit ausserhalb gelegenen Spektralanteile auf eine ebenso brauchbare Signalstärke wie die bisherigen Ausführungen.

Damit lassen sich PIR Bewegungsmelder herstellen mit mechanisch stabilen und widerstandsfähigen Abdeckungen oder Linsen, die bis 2 mm dick oder noch dicker sein können, was gegenüber den bisherigen dünnen und weichen Polyethylen-Linsen oder -Fenstern zu einer wesentlichen Verbesserung der Robustheit und der Ästhetik führt.

Durch die erfindungsgemässe Anordnung wird es auch möglich, ganze Deckel oder Lampenabdeckungen von solchen als Lichtschalter verwendeten Bewegungsmeldern mit eingearbeiteten Linsen oder Fenstern zu versehen, wodurch sich konstruktiv einfache und ästhetisch vorteilhafte Lösungen realisieren lassen.

Die in die Gehäuseabdeckung eingearbeiteten Linsen oder Fresellinsen können in die Gehäuseabdeckung eingeprägte Strukturen sein, wobei eine Gehäuseabdeckung üblicherweise eine Vielzahl solcher Linsen oder Fresnellinsen enthält.

Die Gehäuseabdeckung kann jedoch auch ein einfaches Fenster darstellen, insbesondere wenn zur Erzeugung von besonderen Empfindlichkeitszonen ein Segmentspiegel als zusätzliches optisches Element eingesetzt wird. Ein Segmentspiegel besteht zweckmässigerweise aus einer Vielzahl parabolischer Spiegelstücke, wobei jedes Spiegelstück die Infrarotstrahlung in eine andere Richtung fokussiert. Ein solch einfaches Fenster kann plan oder gewölbt ausgebildet sein, hat jedoch üblicherweise keine optisch bündelnde Wirkung.

Für als Einbruchsicherung verwendete Bewegungsmelder ist es von Vorteil, dass sich mechanisch vandalensichere Ausführungen herstellen lassen, bei denen nicht wie bei der Verwendung von Polyethylen die Funktion mit einfachen Mitteln durch zerstechen oder zerschneiden der Linse oder Abdeckung sabotiert werden kann, und die unauffällig sind und vom Einbrecher gar nicht als solche wahrgenommen werden.

Die Gehäuseabdeckung besteht bevorzugt aus einer Folie, einer Platte oder einem Formkörper aus Polymethylpenten (PMP), Polytetrafluorethylen (PTFE), Polypropylen (PP) oder Polyester.

Weiter bevorzugt besteht die Gehäuseabdeckung aus einer Folie, einer Platte oder einem Formkörper aus einem Verbundwerkstoff oder einem Laminat enthaltend eine Schicht aus Polymethylpenten (PMP), Polytetrafluorethylen (PTFE), Polypropylen (PP) oder Polyester einer Dicke zwischen 0,8 und 3 mm.

Bevorzugt wird weiterhin eine Gehäuseabdeckung, welche aus einer Vielzahl von flachen, zylindrischen oder gewölbten Fresnellinsen oder einer Einzellinse aufgebaut ist oder solche Linsen enthält. Dabei können die Fresnellinsen oder die Einzellinse als in die Gehäuseabdeckung eingeprägte Elemente ausgebildet sein. Die Fresnellinsen oder die Einzellinse können jedoch auch als in die Gehäuseabdeckung eingepresste Elemente aus Polymethylpenten (PMP), Polytetrafluorethylen (PTFE), Polypropylen (PP) oder Polyester ausgebildet sein.

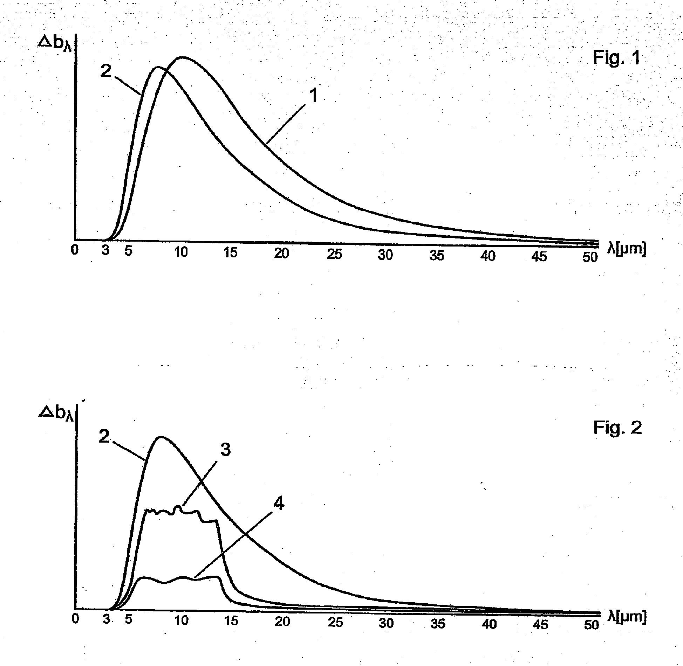

Weitere Vorteile, Merkmale und Einzelheiten der Erfindung ergeben sich aus der nachfolgenden Beschreibung der Zeichnungen; diese zeigen in
- Fig. 1:: schematisch das Planck'sche Strahlungsspektrum der Wärmestrahlung, die ein Körper mit etwa Raumtemperatur von 20 Grad Celsius ausstrahlt, sowie eine beispielhafte Darstellung des Wellenlängen-abhängigen Strahlungskontrastes als Differenz der Planck'schen Strahlung zwischen einem Objekt und dessen Umgebungstemperatur;
- Fig.2:: eine schematische Darstellung eines Wellenlängen-abhängigen Strahlungskontrastes als Differenz der Planck'schen Strahlung zwischen einem Objekt und dessen Umgebungstemperatur, die Durchlasskurve eines für Infrarot-sensitive Bewegungsmelder verwendeten typischen optischen Bandpass-Filters und das daraus resultierende Energiespektrum der durch das Filter durchgelassenen Infrarotstrahlung;

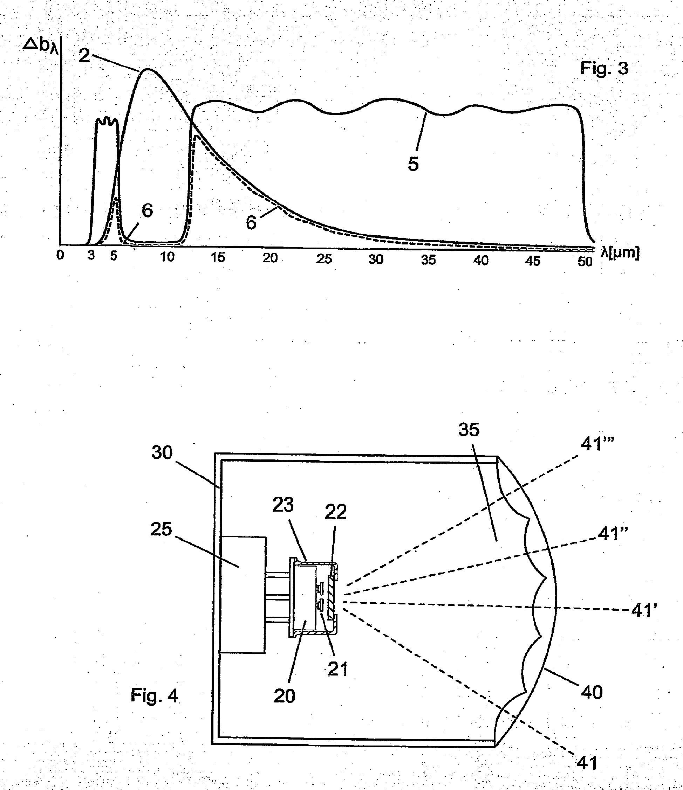

- Fig. 3:: eine schematische Darstellung eines Wellenlängen-abhängigen Strahlungskontrastes als Differenz der Planck'schen Strahlung zwischen einem Objekt und dessen Umgebungstemperatur, die Durchlässigkeit eines optischen Filters für einen erfindungsgemässen PIR-Bewegungsmelder und das daraus resultierende Energiespektrum der durch das Filter durchgelassenen Infrarotstrahlung;
- Fig.4:: einen schematischen Aufbau eines erfindungsgemässen PIR-Bewegungsmelders.

Figur 1 zeigt die bekannte Planck'sche Strahlung (Kurve 1) die ein Körper mit etwa Raumtemperatur von 20 Grad Celsius ausstrahlt. Die Abszisse zeigt die Wellenlänge λ in Mikrometern [µm] und die Ordinate die Strahlungsintensität. PIR-Bewegungsmelder detektieren das Objekt aufgrund der von der Umgebungstemperatur abweichenden Oberflächentemperatur des Objektes. Die Differenz der Planck'schen Strahlung des Objektes und seiner Umgebung aufgrund der unterschiedlichen Temperaturen ist der Strahlungskontrast Δb_{λ} (Kurve 2). Die Kurven 1 und 2 weisen eine ähnliche Form auf; jedoch ist die Kurve 2 gegenüber der Kurve 1 in Abszissenrichtung etwas gegen kürzere Wellenlängen verschoben. Die Energie des Strahlungskontrastes Δb_{λ} wird vom PIR-Bewegungsmelder ausgewertet.

Figur 2 zeigt wiederum die Kurve 2 des Strahlungskontrastes Δb_{λ} sowie eine Kurve 3 entsprechend der Durchlasskurve eines typischen optischen Bandpass-Filters wie es in vorbekannten Ausführungen eingesetzt wird und für Wellenlängen von etwa 7 bis 14 µm durchlässig ist. Die Kurve 4 zeigt die verbleibende Energie wenn die Strahlung (siehe Kurve 2) das Filter 22 (siehe Kurve 3) passiert und zudem durch eine 0.5 mm dicke Abdeckung 40 aus Polyethylen um den Faktor 3 abgeschwächt ist und somit das, was vom Sensor des PIR Bewegungsmelders in den vorbekannten Ausführungen noch aufgenommen wird.

Figur 3 zeigt die Spektrallinien eines erfindungsgemässen Bewegungsmelders, in der auf eine Gehäuseabdeckung aus Polyethylen verzichtet wird und stattdessen eine Gehäuseabdeckung 40 aus Polypropylen, Polytetrafluorethylen (PTFE), Polymethylpenten oder Polyester verwendet wird. Die Kurve 5 zeigt die Durchlässigkeit des verwendeten optischen Filters 22, das in dem gezeigten Beispiel Strahlung von 3.5 bis 6 µm und von 12.5 bis 50 µm durchlässt. Die punktierte Kurve 6 zeigt schliesslich die auf den Sensor 20 auftreffende Strahlung. Da die im erfindungsgemässen Bewegungsmelder verwendeten Kunststoffe für diese Wellenlängen weitgehend transparent sind, tritt auch bei dicken Abdeckungen von beispielsweise 2 mm keine wesentliche zusätzliche Abschwächung auf.

Wie sich aufgrund des in den Figuren gewählten linearen Massstabes erkennen lässt, ist bei einem erfindungsgemässen Bewegungsmelder die auf den Sensor 20 auftreffende Strahlung in der Summe von derselben Grössenordnung wie in vorbekannten Ausführungen, jedoch in anderen Wellenlängenbereichen, was bei den üblicherweise verwendeten Sensoren 20 keinerlei Probleme darstellt, wenn sie mit den geeigneten optischen Filtern 22 versehen werden.

In einer typischen Ausführung besteht ein erfindungsgemässer PIR-Bewegungsmelder aus einem in einem Sensorgehäuse 23 angeordneten Sensor 20, wobei das Sensorgehäuse 23 eine durch ein strahlungsdurchlässiges Fenster 22 geschlossene Öffnung aufweist, das Fenster 22 einen optischen Filter enthält oder daraus besteht, einem elektronischen Verstärker mit Signalauswertungseinheit 25, und einem alles umfassenden Schutzgehäuse 30 mit Gehäuseabdeckung 40, wobei die Gehäuseabdeckung 40 bevorzugt eine Einzellinse oder Fresnellinsen enthält.

Fig. 4 zeigt eine erfindungsgemässe Ausführungsform eines PIR-Bewegungsmelders. PIR-Sensor steht dabei für passiver Infrarot Sensor. Die in Fig. 4 gezeigte Ausführung enthält einen Sensor 20, der in einem Sensorgehäuse 23, das mit einem strahlungsdurchlässigen Fenster als optisches Filter 22 versehen ist und mit diesem weitgehend dicht verschlossen ist und zwei Sensorelemente 21, die elektrisch differentiell geschaltet sind und vorzugsweise aus pyroelektrischem Material bestehen. Der Bewegungsmelder enthält weiter eine Signalauswerteeinheit 25. Zudem enthält der Sensor 20 in herkömmlicher Weise einen hochohmigen Vorverstärker (nicht - gezeigt). Solche als pyroelektrische dual-differential Sensoren 20 bezeichnete Bauteile sind in grosser Zahl auf dem Markt erhältlich.

Es werden jedoch auch Sensoren 20 mit nur einem Sensorelement 21 oder mehreren und anders geformten Sensorelementen 21 hergestellt, oder Sensoren 20 die als Sensorelemente 21 Widerstandsbolometer verwenden, die aufgrund von Strahlung und der daraus resultierenden Erwärmung eine Veränderung des elektrischen Widerstandes auswerten, oder Sensorelemente 21, die als Thermoelemente ausgebildet sind und bei Erwärmung eine elektrische Spannung abgeben. Für die erfindungsgemässe Anordnung ist die Art des Infrarotsensors 20 nicht von Bedeutung, solange dieser Strahlung in einem breiten Bereich von etwa 3.5 bis 50 µm Wellenlänge detektieren kann.

Der Sensor 20 ist mit einer Signalauswerteeinheit 25 verbunden, die auf bekannte Weise ein Ausgangssignal erzeugt, wenn der Sensor 20 wechselnde Strahlung empfängt.

Die ganze Anordnung ist in ein Schutzgehäuse 30 eingebaut, in das auf der Vorderseite eine Vielzahl von Linsen 40 eingearbeitet sind, wodurch sich eine Mehrzahl von diskreten Richtungen 41, 41', 41", 41'" ergeben, aus der die Anordnung Strahlung empfängt.

Aufgrund der Verwendung eines Filters 22, das insbesondere im obersten und untersten Teil des Spektralbereiches durchlässig ist, kann für die Linse 40 ein mechanisch stabiler Kunststoff wie Polypropylen oder Polymethylpenten mit einer Dicke bis zu einigen Millimetern verwendet werden.

Die erfindungsgemässe Ausführung eines solchen PIR-Bewegungsmelders beschränkt sich nicht auf den in Fig. 4 gezeigten Aufbau. Es können alle bekannten Ausführungen mit flachen, zylindrischen oder gewölbten Fresnellinsen, Einzellinsen und dergleichen verwendet werden, oder Segmentspiegel und andere Spiegelanordnungen.

## Patentansprüche

1. Passiv-infrarot (PIR) Bewegungsmelder zur Erfassung eines bewegten Körpers durch Detektion seiner Eigenstrahlung im infraroten Bereich enthaltend ein schalenförmiges Schutzgehäuse (30) mit einer Schutzgehäuseöffnung (35) und einem innerhalb des Schutzgehäuses (30) angeordneten infrarot-empfindlichen Sensor (20) in einem Sensorgehäuse (22), welches mit einem strahlungsdurchlässigen Fenster als optisches Filter (22) versehen und dicht verschlossen ist, wobei die Schutzgehäuseöffnung (35) mit einer Gehäuseabdeckung (40) in Form eines Fensters oder einer Linse versehen ist,
**dadurch gekennzeichnet, dass**
die Gehäuseabdeckung (40) eine Folie, Platte oder einen Formkörper aus einem der Kunststoffe Polymethylpenten (PMP), Polytetrafluorethylen (PTFE), Polypropylen (PP) oder Polyester enthält, die Folie, Platte oder der Formkörper eine Dicke zwischen 0.8 mm und 3 mm aufweist und das zwischen der Gehäuseabdeckung (40) und dem Sensor (20) befindliche optische Filter (22) für Infrarotstrahlung in den Wellenlängenbereichen von 3.5 µm bis 6 µm und zwischen 12.5 und wenigstens 25 µm transparent ist.

2. PIR-Bewegungsmelder nach Anspruch 1, **dadurch gekennzeichnet, dass** die Gehäuseabdeckung (40) aus der Folie, Platte oder dem Formkörper besteht.

3. PIR-Bewegungsmelder nach Anspruch 1, **dadurch gekennzeichnet, dass** das Polyester ein Polyethylen-Terephthalat (PET) ist.

4. PIR-Bewegungsmelder nach Anspruch 1, **dadurch gekennzeichnet, dass** die Gehäuseabdeckung (40) flache, zylindrische oder gewölbte Fresnellinsen oder eine Einzellinse enthält.

5. PIR-Bewegungsmelder nach Anspruch 4, **dadurch gekennzeichnet, dass** die Fresnellinsen oder Einzellinsen in die Gehäuseabdeckung (40) eingeprägte Elemente sind.

6. PIR-Bewegungsmelder nach Anspruch 4, **dadurch gekennzeichnet, dass** die Fresnellinsen oder Einzellinsen in die Gehäuseabdeckung (40) eingepresste Elemente aus Polymethylpenten (PMP), Polytetrafluorethylen (PTFE), Polypropylen (PP) oder Polyester sind.

7. PIR-Bewegungsmelder nach Anspruch 1, **dadurch gekennzeichnet, dass** zur Erzeugung von besonderen Empfindlichkeitszonen zur Erfassung der infraroten Eigenstrahlung von Körpern der PIR-Bewegungsmelder einen zwischen Gehäuseabdeckung (40) und Sensor (20) angeordneten Segmentspiegel als zusätzliches optisches Element aufweist, wobei der Segmentspiegel eine Vielzahl parabolischer Spiegelstücke enthält.

8. PIR-Bewegungsmelder nach Anspruch 1, **dadurch gekennzeichnet, dass** die Gehäuseabdeckung (40) eine Dicke zwischen 0.8 mm und 2 mm, aufweist.

9. PIR-Bewegungsmelder nach Anspruch 1, **dadurch gekennzeichnet, dass** das optische Filter (22) für Wellenlängen von 3:5 µm bis 6 µm und zwischen 12.5 µm und 50 µm transparent ist.

10. PIR-Bewegungsmelder nach Anspruch 1, **dadurch gekennzeichnet, dass** der Sensor (20) ein oder mehrere Sensorelemente (21) aufweist.

11. PIR-Bewegungsmelder nach Anspruch 1, **dadurch gekennzeichnet, dass** der Sensor (20) ein pyroelektrischer Sensor ist mit mindestens zwei differenziell geschalteten Elementen (21).

## Claims

1. Passive infrared (PIR) motion detector for detecting a moving body by detecting its intrinsic radiation in the infrared range including a shell-shaped protective housing (30) with a protective housing opening (35) and an infrared-sensitive sensor (20) within a sensor housing (22) arranged in the protective housing (30), which sensor housing is provided with a radiation-permeable window as an optical filter (22) and is tightly sealed, the protective housing opening (35) being provided with a housing cover (40) in the form of a window or a lens, **characterised in that** the housing cover (40) includes a film, plate or a moulded article made of one of the plastics polymethylpentene (PMP), polytetrafluoroethylene (PTFE), polypropylene (PP) or polyester, the film, sheet or moulded article has a thickness between 0.8 mm and 3 mm and the optical filter (22) located between the housing cover (40) and the sensor (20) is transparent to infrared radiation in the wavelength ranges from 3.5 µm to 6 µm and between 12.5 and at least 25 µm.

2. PIR motion detector according to claim 1, **characterised in that** the housing cover (40) consists of the film, plate or the moulded body.

3. PIR motion detector according to claim 1, **characterised in that** the polyester is a polyethylene terephthalate (PET).

4. PIR motion detector according to claim 1, **characterised in that** the housing cover (40) includes flat, cylindrical or curved Fresnel lenses or a single lens.

5. PIR motion detector according to claim 4, **characterised in that** the Fresnel lenses or individual lenses are elements (40) embossed in the housing cover.

6. PIR motion detector according to claim 4, **characterised in that** the Fresnel lenses or individual lenses are elements pressed in the housing cover (40) which are made of polymethylpentene (PMP), polytetrafluoroethylene (PTFE), polypropylene (PP) or polyester.

7. PIR motion detector according to claim 1, **characterised in that** for generating special sensitivity zones for detecting the infrared intrinsic radiation of bodies, the PIR motion detector has a segment mirror arranged between the housing cover (40) and sensor (20) as an additional optical element, whereby the segment mirror includes a large number of parabolic mirror pieces.

8. PIR motion detector according to claim 1, **characterised in that** the housing cover (40) has a thickness between 0.8 mm and 2 mm.

9. PIR motion detector according to claim 1, **characterised in that** the optical filter (22) is transparent for wavelengths from 3.5 µm to 6 µm and between 12.5 µm and 50 µm.

10. PIR motion detector according to claim 1, **characterised in that** the sensor (20) has one or more sensor elements (21).

11. PIR motion detector according to claim 1, **characterised in that** the sensor (20) is a pyroelectric sensor with at least two differentially connected elements (21).

## Revendications

1. Détecteur de mouvement à infrarouge passif (PIR) permettant de détecter un corps mouvant par détection de son propre rayonnement dans le domaine de l'infrarouge, comprenant un boîtier de protection (30) en forme de coque, muni d'une ouverture de boîtier de protection (35) et d'un capteur sensible à l'infrarouge (20), disposé à l'intérieur du boîtier de protection (30) dans un boîtier de capteur (22), lequel est équipé d'une fenêtre laissant passer les rayonnements à titre de filtre optique (22) et est fermé de manière étanche, l'ouverture de boîtier de protection (35) étant munie d'un couvercle de boîtier (40) sous la forme d'une fenêtre ou d'une lentille,
**caractérisé en ce que**
le couvercle de boîtier (40) contient une feuille, une plaque ou un corps moulé en l'une des matières plastiques polyméthylpentène (PMP), polytétrafluoroéthylène (PTFE), polypropylène (PP) ou polyester, la feuille, la plaque ou le corps moulé présente une épaisseur comprise entre 0,8 mm et 3 mm et le filtre optique (22) pour rayonnement infrarouge dans les plages de longueurs d'onde de 3,5 µm à 6 µm et entre 12,5 et au moins 25 µm, se trouvant entre le couvercle de boîtier (40) et le capteur (20), est transparent.

2. Détecteur de mouvement PIR selon la revendication 1, **caractérisé en ce que** le couvercle de boîtier (40) est constitué de la feuille, de la plaque ou du corps moulé.

3. Détecteur de mouvement PIR selon la revendication 1, **caractérisé en ce que** le polyester est un polyéthylène téréphtalate (PET).

4. Détecteur de mouvement PIR selon la revendication 1, **caractérisé en ce que** le couvercle de boîtier (40) contient des lentilles de Fresnel plates, cylindriques ou bombées ou une lentille unipotentielle.

5. Détecteur de mouvement PIR selon la revendication 4, **caractérisé en ce que** les lentilles de Fresnel ou lentilles unipotentielles sont des éléments gaufrés dans le couvercle de boîtier (40).

6. Détecteur de mouvement PIR selon la revendication 4, **caractérisé en ce que** les lentilles de Fresnel ou lentilles unipotentielles sont des éléments injectés dans le couvercle de boîtier (40) en polyméthylpentène (PMP), polytétrafluoroéthylène (PTFE), polypropylène (PP) ou polyester.

7. Détecteur de mouvement PIR selon la revendication 1, **caractérisé en ce que**, pour produire des zones de sensibilité particulières destinées à la détection du rayonnement infrarouge propre des corps, le détecteur de mouvement PIR présente un miroir segmenté disposé entre le couvercle de boîtier (40) et le capteur (20) comme élément optique supplémentaire, le miroir segmenté comprenant une multitude de morceaux de miroirs paraboliques.

8. Détecteur de mouvement PIR selon la revendication 1, **caractérisé en ce que** le couvercle de boîtier (40) présente une épaisseur comprise entre 0,8 mm et 2 mm.

9. Détecteur de mouvement PIR selon la revendication 1, **caractérisé en ce que** filtre optique (22) pour des longueurs d'ondes de 3,5 µm à 6 µm et entre 12,5 µm et 50 µm est transparent.

10. Détecteur de mouvement PIR selon la revendication 1, **caractérisé en ce que** le capteur (20) présente un ou plusieurs éléments de capteur (21).

11. Détecteur de mouvement PIR selon la revendication 1, **caractérisé en ce que** le capteur (20) est un capteur pyroélectrique comprenant au moins deux éléments (21) à circuit différentiel.
